# FASCICULE DE BREVET EUROPEEN

(11) **EP 1 081 409 B1**
(45) Date de publication et mention de la délivrance du brevet: **10.03.2004**
(21) Numéro de dépôt: 00402248.9
(22) Date de dépôt: 08.08.2000
(51) Int. Cl.: F16F 13/10

(54) **Clapet de support hydroélastique**
Ventil für hydroelastisches Lager
Valve for hydroelastic support

(30) Priorité: 03.09.1999 FR 9911093
(43) Date de publication de la demande: 07.03.2001
(73) Titulaire: Peugeot Citroen Automobiles SA, 92200 Neuilly sur Seine (FR)
(72) Inventeur: Gramond, Bertrand, 35650 Le Rheu (FR); Mortier, Frédéric, 35380 Saint Peran (FR)
(74) Mandataire: Lanceplaine, Jean-Claude

(56) Documents cités:
- EP-A- 0 042 910
- EP-A- 0 307 693
- EP-A- 0 331 951
- EP-A- 0 957 284
- DE-A- 4 233 240
- US-A- 4 664 363

## Description

La présente invention a pour objet un clapet de support hydroélastique destiné à être interposé entre un élément à suspendre et un élément à isoler l'un par rapport à l'autre, notamment pour la suspension d'un groupe motopropulseur dans une caisse d'un véhicule automobile.

L'invention a également pour objet un support hydroélastique équipé d'un tel clapet.

Les supports hydroélastiques ont pour fonction de filtrer les vibrations dues au fonctionnement du groupe motopropulseur et d'amortir les oscillations provenant de la caisse du véhicule automobile lors de son utilisation.

Généralement, les supports hydroélastiques comportent un corps formé par une masse en matériau élastomère reliant une armature supérieure et une armature inférieure fixées respectivement sur les deux éléments et une chambre de travail délimitée au mcins en partie par la masse en matériau élastomère.

De plus, ce type de support comporte une chambre d'expansion délimitée au moins en partie par une membrane inférieure souple.

Cette chambre d'expansion est reliée à la chambre de travail par un passage de communication et ces chambres sont remplies de liquide, comme par exemple de l'anti-gel.

La circulation du liquide d'une chambre à l'autre lorsque le support est soumis à des sollicitations alternées, permet d'obtenir un amortissement à une fréquence donnée.

Pour des fréquences supérieures à cette fréquence déterminée, le liquide ne circule plus dans le passage de communication entre les deux chambres, ce qui provoque une augmentation de la rigidité dynamique, entraînant à son tour une dégradation du filtrage.

Afin d'éviter cette dégradation, les supports hydroélastiques comportent un clapet, également appelé clapet de découplage hydraulique, qui est interposé entre les deux chambres et qui, pour de petites déformations, permet de compenser l'absence de circulation du liquide dans le passage de communication pour ainsi éviter l'augmentation de la raideur apparente liée à l'incompressibilité de ce liquide.

Par contre, le clapet est suffisamment rigide pour ne pas contrarier la circulation du liquide à travers le passage de communication pour des grandes amplitudes d'excitation et cette rigidité est obtenue par des butées limitant la déformation du clapet.

Jusqu'à présent, le compromis entre la souplesse pour de petits déplacements et la raideur pour de grands déplacements est obtenu grâce à un ensemble formé par le clapet et une armature de support dont la géométrie varie en fonction de la solution retenue.

En effet, soit le clapet est entièrement souple dans l'armature qui présente des orifices de petites tailles par rapport aux dimensions dudit clapet et qui autorisent la circulation du liquide, tout en assurant l'appui du clapet en limitant sa déformée, soit le clapet est rigidifié par la présence par exemple d'une toile de faible élasticité et l'armature présente une ouverture de grande dimension.

Dans tous les cas, le jeu entre le clapet et les butées intégrées à l'armature permet d'absorber le débattement de ce clapet pour de faibles amplitudes, mais ce jeu est ajusté de telle façon que son déplacement soit limité pour de grandes amplitudes.

Le jeu entre le clapet et les butées de l'armature doit être suffisant pour absorber complètement le déplacement du liquide mis en mouvement dans la chambre de travail par des vibrations du groupe motopropulseur.

Par contre, pour de grandes amplitudes relatives à la mise en résonance de ce groupe motopropulseur sur sa suspension, le clapet ne doit plus absorber par son déplacement et sa déformation l'intégralité de la variation de volume de la chambre de travail, la plus grande partie du liquide devant circuler dans le passage de communication entre la chambre de travail et la chambre d'expansion afin d'obtenir l'amortissement souhaité à basses fréquences.

L'invention a pour but de proposer un clapet de support hydroélastique de canception simplifiée et qui permet de compenser efficacement l'absence de circulation du liquide dans le passage de communication entre la chambre de travail et la chambre d'expansion et d'éviter l'augmentation de la raideur et la dégradation du filtrage du support hydroélastique.

L'invention a pour objet un clapet de support hydroélastique destiné à être interposé entre un élément à suspendre et un élément à isoler l'un par rapport à l'autre, notamment pour la suspension d'un groupe motopropulseur dans une caisse d'un véhicule automobile, du type comprenant un corps formé par une masse en matériau élastomère reliant une armature supérieure et une armature inférieure, une chambre de travail délimitée au moins en partie par la masse en matériau élastomère et une chambre d'expansion délimitée au moins en partie par une membrane souple, ces deux chambres étant remplies de liquide et reliées entre elles par un passage de communication, et du type dans lequel les chambres de travail et d'expansion sont séparées l'une de l'autre par le clapet dont le bord externe est monté dans une armature de support, caractérisé en ce que ledit clapet comporte une partie centrale réalisée en une matière rigide et une partie périphérique annulaire réalisée en une matière souple et est obtenu en une opération par injection des deux matières.

Selon d'autres caractéristiques de l'invention :
- la partie centrale rigide est formée par un disque,
- la partie centrale rigide est formée, d'une part, par un disque et, d'autre part, par une couronne concentrique audit disque, le disque et la couronne étant séparés l'un de l'autre par une portion flexible,
- la matière de la partie centrale est formée par un polymère rigide ou semi-rigide et la matière de la partie périphérique annulaire est formée par un polymère souple,
- la portion flexible est formée par un polymère souple et venue de matière avec la partie périphérique,
- la partie centrale et la partie périphérique annulaire sont reliées entre elles par adhérisation ou par une liaison mécanique.

L'invention a également pour objet un support hydroélastique destiné à être interposé entre un élément à suspendre et un élément à isoler l'un par rapport à l'autre, notamment pour la suspension d'un groupe motopropulseur dans une caisse d'un véhicule automobile, caractérisé en ce qu'il comprend un clapet tel que mentionné ci-dessus.

Les caractéristiques et avantages de l'invention apparaîtront au cours de la description qui va suivre, donnée à titre d'exemple et faite en référence aux dessins annexés, sur lesquels :
- la Fig. 1 est une vue en coupe axiale d'un support hydroélastique muni d'un clapet conforme à l'invention,
- la Fig. 2 est une vue schématique en coupe axiale d'un premier mode de réalisation d'un clapet de support hydroélastique, conforme à l'invention,
- la Fig. 3 est une vue en perspective partiellement arrachée du clapet de la Fig. 2,
- la Fig. 4 est une vue schématique en coupe axiale d'un second mode de réalisation d'un clapet de support hydroélastique, conforme à l'invention,
- la Fig. 5 est une vue schématique en perspective de la partie centrale du clapet de la Fig. 4,
- la Fig. 6 est une vue schématique en perspective et partiellement arrachée du clapet de la Fig. 4.

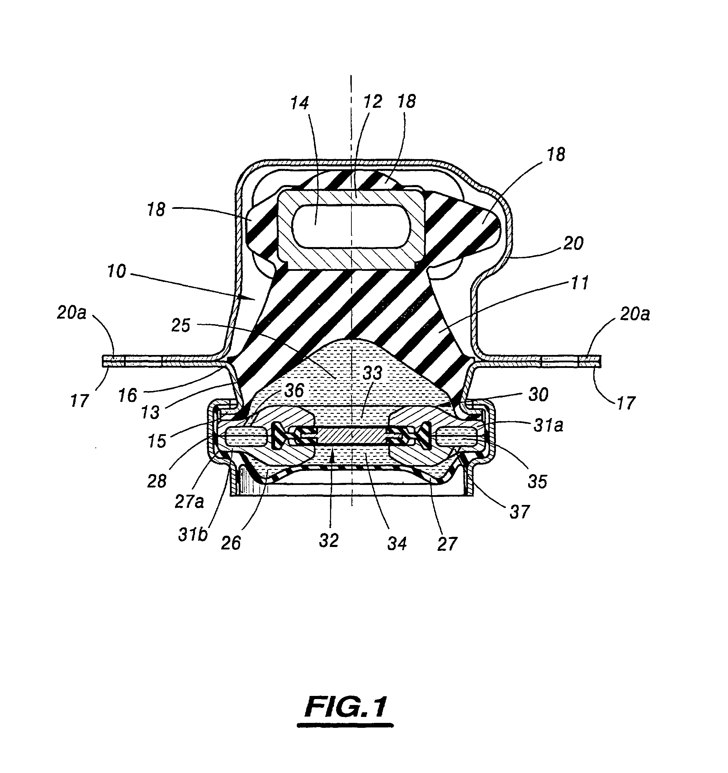

Le support hydroélastique représenté à la Fig. 1 est adapté pour être interposé entre un élément à suspendre et un élément à isoler l'un par rapport à l'autre et plus particulièrement pour être interposé entre un groupe motopropulseur et le reste de la structure ou châssis de ce véhicule.

Le support hydroélastique comprend un corps 10 formé par une masse en matériau élastomère 11 qui relie, d'une part, une armature supérieure 12 et, d'autre part, une armature inférieure 13.

L'armature supérieure 12 est formée, dans l'exemple de réalisation représenté à la Fig. 1, par un organe tubulaire comportant un perçage axial 14 pour le passage d'un organe de liaison, non représenté, avec l'élément à supporter, comme par exemple le groupe motopropulseur d'un véhicule automobile.

L'armature inférieure 13 comporte un rebord inférieur 15 replié vers l'extérieur et un rebord supérieur 16 muni de pattes de fixation 17 sur l'élément à isoler, c'est à dire la caisse du véhicule automobile.

Le corps 10 est réalisé par surmoulage et adhérisation de l'élastomère sur les armatures 12 et 13.

Le support hydroélastique comporte également un boîtier 20 qui coiffe le corps 10 et qui est fixé sur l'armature inférieure 17 au moyen de pattes 20a.

Ce boîtier comporte deux ouvertures opposées pour le passage de l'organe de liaison entre l'armature supérieure 12 et le groupe motopropulseur du véhicule automobile.

Par ailleurs, la masse 11 en matériau élastomère du corps 10 comporte des organes de butée 18 coopérant avec les parois du boîtier 20 pour assurer la reprise des efforts dans toutes les directions de sollicitation du support, limiter les débattements en attaque et en détente et reprendre les efforts en accélération et en freinage.

Le support hydroélastique comporte aussi une chambre de travail 25 délimitée en partie haute par la masse en matériau élastomère 11 et une chambre d'expansion 26 disposée au-dessous de ladite chambre de travail 25 et délimitée en partie basse par une membrane souple 27.

Les chambres de travail 25 et d'expansion 26 sont délimitées, respectivement en partie basse pour ladite chambre de travail 25 et en partie haute pour ladite chambre d'expansion 26, par une cloison transversale désignée dans son ensemble par la référence 30.

La membrane souple 27 comporte un rebord périphérique 27a qui est adhérisé sur une armature externe 28 formant un support pour la cloison transversale 30 et munie à sa partie supérieure d'un rebord de sertissage 28a sur le rebord 15 de l'armature inférieure 13 du corps 10.

La cloison transversale 30 se compose d'une armature 31 formée d'une première partie 31a et d'une seconde partie 31b symétriques l'une par rapport à l'autre.

Entre les deux parties 31a et 31b de l'armature 31 est interposé un clapet 32 appelé clapet de découplage hydraulique.

La première partie 31a est munie d'un passage axial 33 permettant au clapet 32 de recevoir la pression du liquide induite dans la chambre de travail 25 et la seconde partie 31b comporte également un passage axial 34 permettant audit clapet 32 de recevoir la pression du liquide induite dans la chambre d'expansion 26.

Par ailleurs, les faces en regard des deux parties 31a et 31b comportent chacune une gorge qui détermine un passage de communication 35 de longueur importante par rapport à son diamètre et qui est relié avec la chambre de travail 25 par un orifice 36 ménagé dans la première partie 31a et avec la chambre d'expansion 26 par un orifice 37 ménagé dans la seconde partie 31b de l'armature 31.

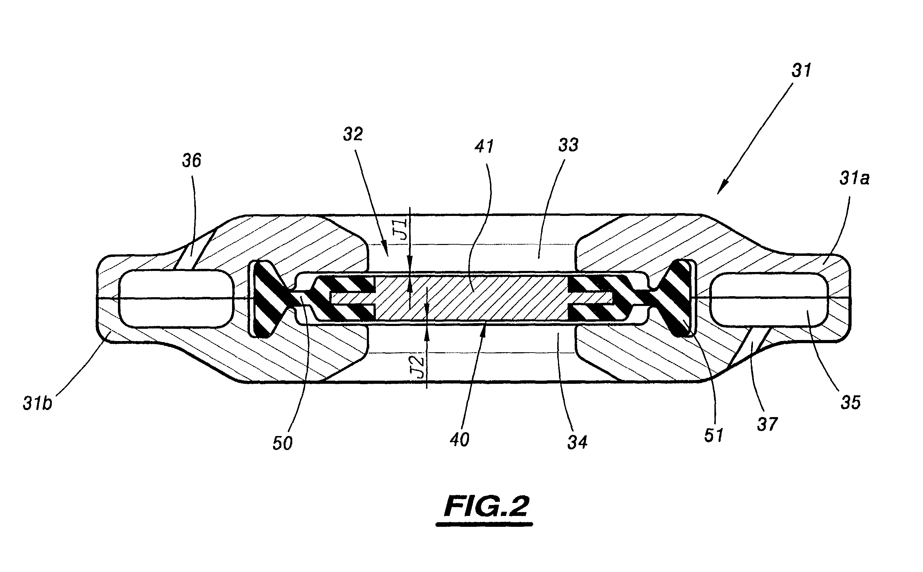

D'une manière générale et comme représenté sur les Figs. 2 à 6, le clapet 22 conforme à l'invention comporte une partie centrale 40 réalisée en une matière rigide et une partie périphérique annulaire 50 réalisée en une matière souple.

La partie périphérique 50 comporte, sur son bord externe, un talon 51 de maintien dudit clapet 32 entre les deux parties 31a et 31b de l'armature 31 formant le support dudit clapet 32.

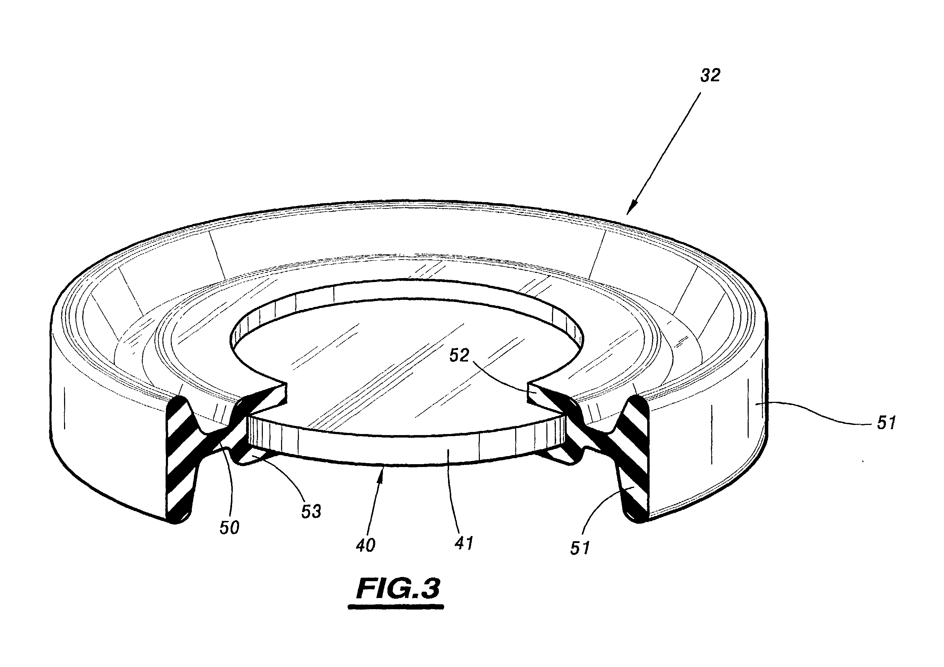

Selon un premier mode de réalisation représenté sur les Figs. 2 et 3, la partie centrale 40 est formée par un disque 41 et la matière de ce disque 41 est constituée d'un polymère rigide ou semi-rigide, comme par exemple un thermoplastique ou un élastomère thermoplastique semi-rigide ou un thermodurcissable.

La matière de la partie périphérique annulaire 50 est constituée d'un polymère souple possédant des propriétés élastiques, comme par un exemple un élastomère, vulcanisé ou non, ou un élastomère thermoplastique.

La partie centrale 40 et la partie périphérique 50 formant le clapet 32 sont réalisées en une seule opération par injection des deux polymères et cette partie périphérique 50 flexible est surmoulée sur la partie centrale 41.

A cet effet, la partie périphérique 50 comporte deux lèvres parallèles, respectivement 52 et 53, qui ménagent entre elles un espace dans lequel est disposé le disque 41.

Ainsi, la partie périphérique 50 est surmoulée sur le disque 41 et ces deux éléments sont reliés entre eux par adhérisation ou par une liaison mécanique.

Lors du fonctionnement du support hydroélastique, la partie périphérique 50 flexible permet les débattements du clapet 32 et ces débattements sont limités par des appuis rigides 30a et 30b ménagés respectivement dans la première partie 31a et le seconde partie 31b de l'armature 31.

Les jeux j1 et j2 de part et d'autre du clapet 32 avec les appuis 30a et 30b sont égaux ou différents selon le but recherché.

Le clapet 32 permet de filtrer les vibrations dues aux déplacements de faibles amplitudes d'excitation et la limite est atteinte lorsque ce clapet 32 vient en butée sur les appuis 30a et 30b de l'armature 31.

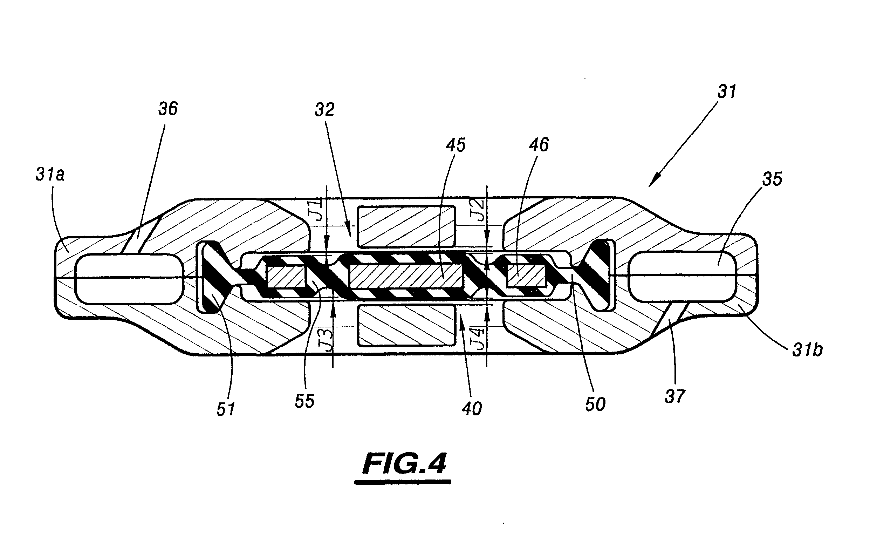

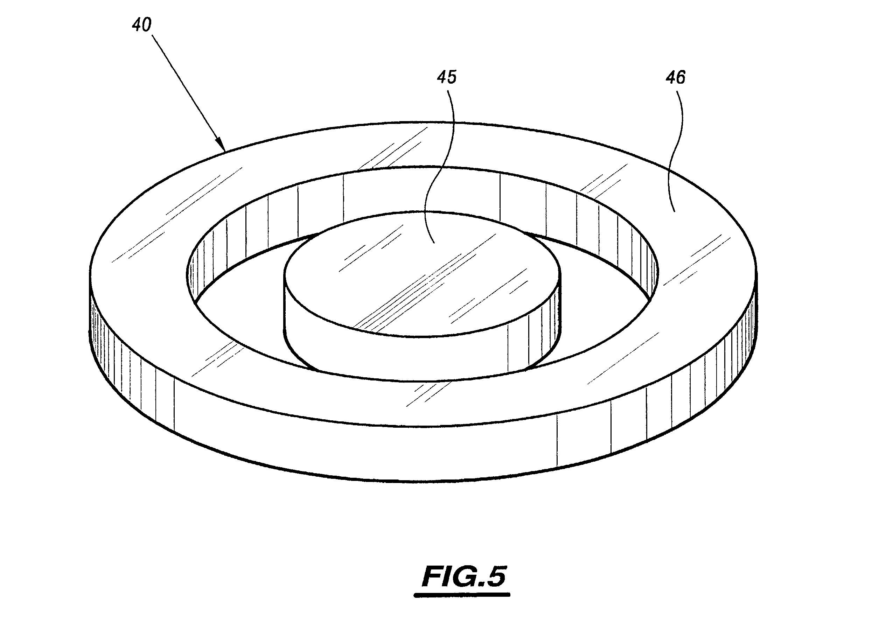

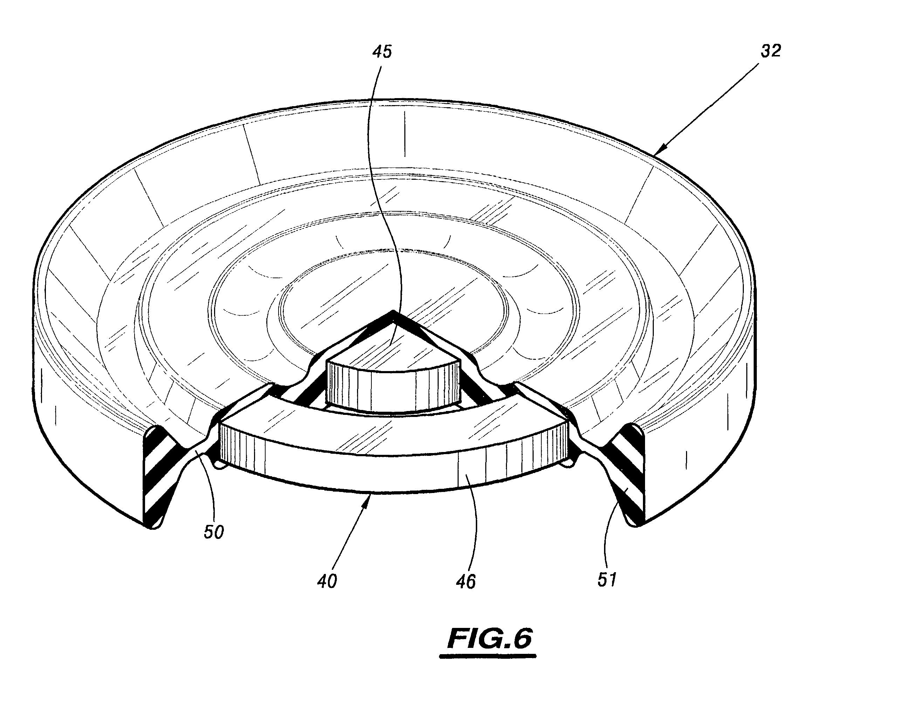

Selon un second mode de réalisation représenté sur les Figs. 4 à 6, le clapet 32 comporte une partie centrale 40 rigide formée, d'une part, par un disque 45 et, d'autre part, par une couronne 46 concentrique audit disque, comme représenté sur les Figs. 5 et 6.

Le disque 45 et la couronne 46 sont séparés l'une de l'autre par une portion flexible 55.

La partie centrale 40 formée par le disque 45 et la couronne 46 est réalisée en un polymère rigide ou semi-rigide, comme par exemple un thermoplastique ou un élastomère thermoplastique semi-rigide ou un thermodurcissable et la partie périphérique 50 ainsi que la portion flexible 55 intermédiaire venue de matière avec la partie périphérique 50 sont réalisées en un polymère souple possédant des propriétés élastiques, comme par exemple un élastomère, vulcanisé ou non ou un élastomère thermoplastique.

L'ensemble constitué par la partie centrale 40 formée par le disque 45 et la couronne 46 ainsi que par la partie périphérique 50 et par la portion intermédiaire 55 est réalisée en une opération par injection des deux polymères et cette partie centrale 40 et cette partie périphérique 50 sont reliées entre elles par adhérisation ou par une liaison mécanique.

Ainsi que représenté à la Fig. 6, le polymère constituant la partie périphérique 50 et la portion intermédiaire 55 est surmoulé sur le disque 45 et la couronne 46 et recouvre donc complètement ces deux éléments.

Lors du fonctionnement du support hydroélastique, la limitation des battements de ce clapet 32 est limitée par un ou plusieurs appuis rigides 30a et 30b ménagés sur les parties 31a et 31b de l'armature 31.

Les jeux j1 et j3, de part et d'autre de la couronne 46 du clapet 32, sont égaux ou non selon le but recherché et les jeux j2 et j4 de part et d'autre du disque 45 de la partie centrale 42, sont égaux ou non selon le but recherché et dans tous les cas, les jeux entre respectivement le disque 45 et la couronne 46 avec les appuis correspondant de l'armature 31 sont différents de façon à obtenir différents niveaux de filtrage.

Lorsque le support hydroélastique est soumis à des sollicitations alternées, le passage de communication 35 autorise la circulation de la chambre de travail 25 vers la chambre d'expansion 26 ou inversement, ce qui permet l'amortissement recherché a une fréquence déterminée.

Pour des fréquences supérieures à cette fréquence précédemment définie, le fluide ne circule plus dans le passage de communication 35 ce qui provoque une augmentation de la raideur, entraînant de ce fait une dégradation du filtrage.

Pour ces fréquences, ces amplitudes d'excitation étant plus faibles, le clapet 32 permet de compenser l'absence de mouvement du liquide dans le passage de communication 35 et d'éviter ainsi l'augmentation de raideur liée à l'incompressibilité du liquide.

Par contre, pour des grandes amplitudes d'excitation, le clapet 32 est suffisamment rigide pour ne pas contrarier la circulation du fluide à travers le passage de communication 35.

Le clapet selon l'invention destiné aux supports hydroélastiques permet d'obtenir un clapet rigide en son centre et souple sur son pourtour grâce à la réalisation de ce clapet en une seule opération et ce clapet présente l'avantage d'être d'un coût réduit grâce au surmoulage par injection bi-matières du fait de la diminution du temps de cycle, d'un coût de la matière faible et d'une réduction des opérations de manutention.

De plus, selon le type de matières composant les éléments du clapet, un gain de masse plus ou moins important est obtenu.

## Revendications

1. Clapet de support hydroélastique destiné à être interposé entre un élément à suspendre et un élément à isoler l'un par rapport à l'autre, notamment pour la suspension d'un groupe motopropulseur dans une caisse d'un véhicule automobile, du type comprenant un corps (10) formé par une masse en matériau élastomère (11) reliant une armature supérieure (12) et une armature inférieure (13), une chambre de travail (25) délimitée au moins en partie par la masse en matériau élastomère et une chambre d'expansion (26) délimitée au moins en partie par une membrane souple (27), ces deux chambres (25, 26) étant remplies de liquide et reliées entre elles par un passage de communication (35), et du type dans lequel les chambres de travail (25) et d'expansion (26) sont séparées l'une de l'autre par le clapet (32) dont le bord externe est monté dans un support (31a, 31b), **caractérisé en ce que** ledit clapet (32) comporte une partie centrale (40) réalisée en une matière rigide et une partie périphérique annulaire (50) réalisée en une matière souple et est obtenu en une opération par injection des deux matières.

2. Clapet selon la revendication 1, **caractérisé en ce que** la partie centrale (40) rigide est formée par un disque (41).

3. Clapet selon la revendication 1, **caractérisé en ce que** la partie centrale (40) est formée, d'une part, par un disque (45), et d'autre part, par une couronne (46) concentrique audit disque, le disque (45) et la couronne (46) étant séparée l'une de l'autre par une portion (55) flexible.

4. Clapet selon l'une quelconque des revendications 1 à 3, **caractérisé en ce que** la matière de la partie centrale (40) est formée par un polymère rigide ou semi-rigide et la matière de la partie périphérique (50) annulaire est formée par un polymère souple.

5. Clapet selon les revendications 3 et 4, **caractérisé en ce que** la portion flexible (55) est formée par un polymère souple et venue de matière avec la partie périphérique (50).

6. Clapet selon l'une quelconque des revendications 1 à 5, **caractérisé en ce que** la partie centrale (40) et la partie périphérique (50) annulaire sont reliées entre elles par adhérisation ou par une liaison mécanique.

7. Support hydroélastique destiné à être interposé entre un élément à suspendre et un élément à isoler l'un par rapport à l'autre, notamment pour la suspension d'un groupe motopropulseur dans une caisse d'un véhicule automobile, **caractérisé en ce qu'**il comporte un clapet (32) selon l'une quelconque des revendications précédentes.

## Claims

1. Valve for a hydroelastic support adapted to be interposed between an element which is to be suspended and an element which is to be isolated from the other, notably for the suspension of a power unit in a housing of a motor vehicle, of the type comprising a body (10) formed by a mass of elastomeric material (11) connecting an upper reinforcement (12) and a lower reinforcement (13), a working chamber (25) at least partly delimited by the mass of elastomeric material and an expansion chamber (26) at least partly delimited by a flexible membrane (27), these two chambers (25, 26) being filled with liquid and connected to one another by a communication passage (35), and of the type wherein the working chamber (25) and expansion chamber (26) are separated from each other by the valve (32) the outer edge of which is mounted in a support (31a, 31b), **characterised in that** said valve (32) comprises a central part (40) made of a rigid material and an annular peripheral part (50) made of a flexible material and is obtained in one step by injecting the two materials.

2. Valve according to claim 1, **characterised in that** the rigid central part (40) is formed by a disc (41).

3. Valve according to claim 1, **characterised in that** the central part (40) is formed on the one hand by a disc (45) and on the other hand by a crown (46) concentric with said disc, the disc (45) and the crown (46) being separated from each other by a flexible portion (55).

4. Valve according to any one of claims 1 to 3, **characterised in that** the material of the central part (40) is formed by a rigid or semi-rigid polymer and the material of the annular peripheral part (50) is formed by a flexible polymer.

5. Valve according to claims 3 and 4, **characterised in that** the flexible portion (55) is formed by a flexible polymer integrally formed with the peripheral part (50).

6. Valve according to any one of claims 1 to 5, **characterised in that** the central part (40) and the annular peripheral part (50) are connected to each other by adhesive bonding or by a mechanical connection.

7. Hydroelastic support adapted to be interposed between an element to be suspended and an element to be insulated one from the other, notably for the suspension of a power unit in a housing of a motor vehicle, **characterised in that** it comprises a valve (32) according to any one of the preceding claims.

## Patentansprüche

1. Klappe eines hydroelastischen Lagers, das dazu bestimmt ist, zwischen ein aufzuhängendes Element und ein in Bezug auf das andere zu trennendes Element eingesetzt zu werden, insbesondere für die Aufhängung eines Antriebsaggregates in einer Karosserie eines Kraftfahrzeuges, eines Typs, der einen Körper (10) umfasst, welcher aus einer Masse aus elastomerem Material (11) gebildet ist, der eine obere Bewehrung (12) und eine untere Bewehrung (13) verbindet, eine Arbeitskammer (25), welche mindestens teilweise durch die Masse aus elastomerem Material begrenzt ist, und eine Ausdehnungskammer (26), welche mindestens teilweise durch eine nachgiebige Membran (27) begrenzt ist, wobei diese beiden Kammern (25, 26) mit Flüssigkeit gefüllt sind und untereinander durch einen Verbindungsdurchgang (35) verbunden sind, und eines Typs, bei dem die Arbeitskammer (25) und die Ausdehnungskammer (26) durch die Klappe (32) voneinander getrennt sind, deren äußerer Rand in einer Abstützung (31a, 31b) untergebracht wird, **dadurch gekennzeichnet, dass** die Klappe (32) einen zentralen Abschnitt (40), welcher aus einem starren Material hergestellt ist, und einen ringförmigen, umfangsseitigen Abschnitt (50) umfasst, welcher aus einem nachgiebigen Material hergestellt ist, und in einem Arbeitsschritt durch Einspritzung der beiden Materialien geschaffen worden ist.

2. Klappe nach Anspruch 1, **dadurch gekennzeichnet, dass** der zentrale steife Abschnitt (40) durch eine Scheibe (41) gebildet ist.

3. Klappe nach Anspruch 1, **dadurch gekennzeichnet, dass** der zentrale Abschnitt (40) einerseits durch eine Scheibe (45) und andererseits durch eine Einfassung (46) gebildet ist, welche konzentrisch zu der Scheibe angeordnet ist, wobei die Scheibe (45) und die Einfassung (46) voneinander durch einen flexiblen Bereich (55) getrennt sind.

4. Klappe nach irgendeinem der Ansprüche 1 bis 3, **dadurch gekennzeichnet, dass** das Material des zentralen Abschnittes (40) aus einem starren oder halbstarren Polymer ausgestaltet ist und das Material des ringförmigen, umfangsseitigen Abschnittes (50) durch ein nachgiebiges Polymer gebildet ist.

5. Klappe nach den Ansprüchen 3 und 4, **dadurch gekennzeichnet, dass** der flexible Bereich (55) durch ein nachgiebiges Polymer und aus einem Stück zusammen mit dem umfangsseitigen Abschnitt (50) gebildet ist.

6. Klappe nach irgendeinem der Ansprüche 1 bis 5, **dadurch gekennzeichnet, dass** der zentrale Abschnitt (40) und der ringförmige, umfangsseitige Abschnitt (50) durch anhaftende Verbindung oder eine mechanische Verbindung miteinander verbunden sind.

7. Hydroelastisches Lager, das dazu bestimmt ist, zwischen ein aufzuhängendes Element und ein in Bezug auf das andere zu trennendes Element eingesetzt zu werden, insbesondere für die Aufhängung eines Antriebsaggregates in einer Karosserie eines Kraftfahrzeuges, **dadurch gekennzeichnet, dass** es eine Klappe (32) gemäß irgendeinem der vorhergehenden Ansprüche umfasst.
